(19) **Europäisches Patentamt**
**European Patent Office**
**Office européen des brevets**

(11) **EP 1 804 557 A1**

(12) **EUROPÄISCHE PATENTANMELDUNG**

(43) Veröffentlichungstag:
04.07.2007  Patentblatt 2007/27

(51) Int Cl.:
*H05K 1/02* (2006.01)          *G06F 21/06* (2006.01)

(21) Anmeldenummer: 06026836.4

(22) Anmeldetag: 22.12.2006

(84) Benannte Vertragsstaaten:
AT BE BG CH CY CZ DE DK EE ES FI FR GB GR
HU IE IS IT LI LT LU LV MC NL PL PT RO SE SI
SK TR
Benannte Erstreckungsstaaten:
AL BA HR MK YU

(30) Priorität: 28.12.2005  DE 102005062802

(71) Anmelder: EL-ME Aktiengesellschaft
84072 Au i.d. Hallertau (DE)

(72) Erfinder:
• **Fischer, Markus**
**84178 Kröning (DE)**
• **Froschermeier, Günther**
**93326 Abensberg (DE)**

(74) Vertreter: Strass, Jürgen
Prinz & Partner GbR
Rundfunkplatz 2
80335 München (DE)

(54) **Elektronik-Sicherheits-Modul**

(57)      Ein Elektronik-Sicherheits-Modul umfaßt einen geschützten Bereich (18), in dem sicherheitsrelevante Bauteile (20) untergebracht sind. Das Elektronik-Sicherheits-Modul weist wenigstens eine erste Leiterplatte (10, 12) und eine zu dieser Leiterplatte (10, 12) benachbarte zweite Leiterplatte (10, 12) oder eine Abdeckung (38) auf. In der ersten Leiterplatte (10, 12) sind Durchkontaktierungen vorgesehen, die sich durch einen Teil der Leiterplatte (10, 12) erstrecken oder von einer ersten Seite der Leiterplatte (10, 12) durch die Leiterplatte (10, 12) hindurch zu einer der ersten Seite entgegengesetzten zweiten Seite der Leiterplatte (10,12) führen.

# Fig. 1

EP 1 804 557 A1

**Beschreibung**

Die Erfindung betrifft ein Elektronik-Sicherheits-Modul, mit einem geschützten Bereich, in dem sicherheitsrelevante Bauteile untergebracht sind, wobei das Elektronik-Sicherheits-Modul wenigstens eine erste Leiterplatte und eine zu dieser Leiterplatte benachbarte zweite Leiterplatte oder Abdeckung aufweist.

Mit solchen Elektronik-Sicherheits-Modulen, die beispielsweise bei elektronischen Bezahlungsvorgängen eingesetzt werden, werden vertrauliche Daten vor unberechtigten Zugriffen bzw. Ausspähen geschützt. Sicherheitsrelevante Bauteile des Elektronik-Sicherheits-Moduls können in diesem Zusammenhang Speicher sein, in denen die vertraulichen Daten abgelegt sind, Prozessoren, in denen die Daten verarbeitet werden, etc.

Es sind verschiedene Maßnahmen bekannt, solche Elektronik-Sicherheits-Module vor Manipulationen zu schützen. Als Schutz vor einem Durchbohren der Wände des Elektronik-Sicherheits-Moduls, um sich unerlaubt Zugang zum geschützten Innenbereich des Elektronik-Sicherheits-Moduls zu verschaffen, können sog. Mäanderleitungen oder Drahtwicklungen vorgesehen sein. Die Elektronik des Moduls wird zu diesem Zweck z.B. feinmaschig mit Draht umwickelt und anschließend komplett vergossen. Anstelle der Drahtwicklungen in der Vergußmasse wird oft eine Kombination von Mäanderfolien und Mäanderleitungen in einem Layer einer Leiterplatte verwendet, meist ebenfalls in Kombination mit Verklebung oder Verguß. Bei wieder anderen Lösungen wird die Mäanderfolie um die Elektronik gelegt und mit der Leiterplatte vergossen. Es ist auch möglich, das Gehäuse des Elektronik-Sicherheits-Moduls mit Mäanderleitungen zu beschichten. Eine Überwachungselektronik des Elektronik-Sicherheits-Moduls erkennt bei einem Manipulationsversuch ein Kurzschließen oder Unterbrechen der Mäanderleitungen bzw. Drahtwicklungen.

Bei einigen Elektronik-Sicherheits-Modulen wird eine Widerstandsmessung an den Mäanderleitungen durchgeführt. Die gemessenen Widerstandswerte werden dann mit fest vorgegebenen Werten verglichen.

Nachteilig bei den bekannten Elektronik-Sicherheits-Modulen ist, daß eine Reparatur oder eine Fehleranalyse nicht möglich (z.B. bei vergossenen Modulen) oder sehr teuer ist, da nur an den nach außen geführten Signalleitungen gemessen werden kann. Bei Elektronik-Sicherheits-Modulen mit Leiterplatten, auf die eine Mäanderfolie aufgeklebt ist, wird die Mäanderfolie bei einer Demontage zerstört. Es ist aufwendig, die Leiterplatte nach der Reparatur/Fehleranalyse von den Resten der Mäanderfolie und des Klebers zu reinigen, bevor eine neue Mäanderfolie aufgeklebt werden kann.

Ein weiterer Nachteil bekannter Elektronik-Sicherheits-Module, bei denen Widerstandsmessungen vorgenommen werden, besteht darin, daß die Widerstandsmessungen sehr ungenau bzw. die Grenzwerte sehr großzügig gewählt sein müssen, weil die spezifischen Widerstände der Mäanderleitungen in der Regel nicht berücksichtigt werden. Die großzügigen Grenzwerte sind daher erforderlich, um Temperatur-, Alterungs- und ähnliche Einflüsse zu berücksichtigen. Bei einigen Elektronik-Sicherheits-Modulen wird dem spezifischen Widerstand der einzelnen Mäanderleitungen zwar Rechnung getragen, indem bei der Fertigung des Moduls eine spezifische Bestückung erfolgt. Dies ist jedoch sehr aufwendig.

Somit ist bei vielen bekannten Elektronik-Sicherheits-Modulen eine Manipulation der Mäanderleitungen grundsätzlich möglich. Größere Flächen der Mäanderleitungen können deaktiviert werden, indem die Anfangspunkte und die Endpunkte einzelner Mäanderleitungen überbrückt und anschließend diese Mäanderleitungen aus der überbrückten Fläche entfernt werden. Falls bei dem betroffenen Elektronik-Sicherheits-Modul Widerstandsmessungen durchgeführt werden, kann der Widerstand der Brücke dem Widerstand des entfernten Leitungsabschnitts angepaßt werden. Die Überbrückung wird in diesem Fall zu einem Zeitpunkt durchgeführt, in dem keine Widerstandsmessung stattfindet. Es kann also eine Öffnung zum geschützten Bereich des Elektronik-Sicherheits-Moduls hergestellt werden, die einen unerlaubten Zugriff auf das Innere des Elektronik-Sicherheits-Moduls ermöglicht.

Es ist Aufgabe der Erfindung, die Sicherheit eines Elektronik-Sicherheits-Moduls zu verbessern und gleichzeitig die Herstellungs- und Reparaturkosten zu senken.

Zur Lösung dieser Aufgabe wird ein Elektronik-Sicherheits-Modul der eingangs genannten Art vorgeschlagen, bei dem in der ersten Leiterplatte Durchkontaktierungen vorgesehen sind, die sich durch einen Teil der Leiterplatte erstrecken oder von einer ersten Seite der Leiterplatte durch die Leiterplatte hindurch zu einer der ersten Seite entgegengesetzten zweiten Seite der Leiterplatte führen. Insbesondere bei einem Elektronik-Sicherheits-Modul, das im wesentlichen aus aufeinanderliegenden Leiterplatten aufgebaut ist, bietet die Erfindung einen effizienten Schutz vor allem vor einem seitlichen Eindringen in das Elektronik-Sicherheits-Modul. Die Durchkontaktierungen schaffen die Voraussetzung für eine vertikale Mäanderstruktur, die von einer Leiterplatte auf die benachbarte Leiterplatte oder die Abdeckung übergreifen kann. Die vertikalen Durchkontaktierungen stehen vorzugsweise in Verbindung mit horizontalen Mäanderleitungen der Leiterplatte.

Gemäß einem weiteren Sicherheitsaspekt der Erfindung weist wenigstens eine der Leiterplatten Mäanderleitungen auf, die vorzugsweise in wenigstens zwei Lagen übereinander angeordnet sind. Eine mehrlagige Anordnung von Mäanderleitungen sorgt insbesondere für einen besseren Durchbohrschutz. Die Schwierigkeit, bei einem Manipulationsversuch in keiner der Lagen eine Mäanderleitung zu beschädigen, ist deutlich höher als bei einer einlagigen Struktur. Auch die Überbrückung größerer Flächen wird durch eine mehrlagige Struktur erschwert.

Die Mäanderleitungen einer Lage sind vorzugsweise versetzt zu den Mäanderleitungen einer benachbarten Lage angeordnet. Beim Versuch, ein Loch zwischen zwei Mäanderleitungen einer äußeren Lage zu bohren, trifft man aufgrund der versetzten Anordnung der Mäanderleitungen mit hoher Wahrscheinlichkeit auf eine Mäanderleitung der benachbarten Lage. So kann entweder die Dichte der Mäanderleitungen in einer Lage reduziert werden, was die Fertigung vereinfacht, oder bei gleicher Dichte von Mäanderleitungen in jeder Lage der Schutz signifikant erhöht werden.

Bei den bevorzugten Ausführungsformen beträgt die Breite einer Mäanderleitung nicht mehr als 150 μm. Der Abstand zwischen zwei Mäanderleitungen einer Lage beträgt ebenfalls nicht mehr als 150 μm.

Es erweist sich als vorteilhaft, daß die Mäanderleitungen einer Lage von einer Steuereinrichtung mit wenigstens zwei unterschiedlichen Signalen gespeist werden. So können parallel geführte Mäanderleitungen mit unterschiedlichen Signalen betrieben werden. Ein Kurzschluß zwischen zwei benachbarten Mäanderleitungen ist dann leicht erkennbar.

Vorzugsweise beeinflußt eine Mäanderleitung unterschiedliche Messungen einer Überwachungselektronik des Moduls. Mit einer geeigneten Meßeinrichtung werden fortlaufend z.B. Widerstands- und Kapazitätsmessungen an den Mäanderleitungen (innerhalb einer Leiterplatte oder zwischen zwei Leiterplatten) durchgeführt. Manipulationsversuche, bei denen Mäanderleitungen unterbrochen oder überbrückt werden, können sowohl aufgrund der dabei auftretenden Widerstands- als auch der Kapazitätsänderungen zuverlässiger erkannt werden.

Gemäß einer Weiterbildung der Erfindung ist zusätzlich eine Meßeinrichtung zur Messung einer Kapazität zwischen den beiden Leiterplatten bzw. zwischen der ersten Leiterplatte und der Abdeckung des Elektronik-Sicherheits-Moduls vorgesehen. Ein großer Vorteil einer solchen Messung ist, daß ein als Sensor dienender Kondensator kostengünstig aus den vorhandenen elektrisch leitenden Flächen der Leiterplatte realisierbar ist. Ein Isolator zwischen den elektrisch leitenden Flächen (z.B. ein Lötstoplack auf wenigstens einer der gegenüberliegenden Leiterplatten) bildet das Dielektrikum des Kondensators, das Einfluß auf die Größe der Kapazität hat. Die elektrisch leitenden Flächen können durch ausgefüllte Flächen, Mäanderleitungen und/oder Pads von Durchkontaktierungen gebildet sein. Die somit ermöglichte Überwachung des Abstands zwischen zwei Leiterplatten ist deutlich schwieriger zu manipulieren als z.B. ein Kontaktschalter zu einem Gehäuse oder einem anderen Bauteil, wie er oft bei bekannten Elektronik-Sicherheits-Modulen verwendet wird. Die Überbrückung eines Schalters ist nämlich einfacher realisierbar als eine Manipulation einer Kapazitätsmessung, bei der auf kleine Änderungen der gemessenen Kapazität reagiert werden kann. Ein durch Kapazitätsmessungen geschütztes Elektronik-Sicherheits-Modul ermöglicht auch einen Aufbau, der das zerstörungsfreie Öffnen des Elektronik-Sicherheits-Moduls zur Fehleranalyse oder Reparatur erlaubt. Die sicherheitsrelevanten Daten werden beim Öffnen zwar gelöscht, können aber nach der Reparatur wieder aufgespielt werden.

Weitere vorteilhafte und zweckmäßige Ausgestaltungen des erfindungsgemäßen Elektronik-Sicherheits-Moduls ergeben sich aus den Unteransprüchen.

Die Erfindung wird nachfolgend anhand von Ausführungsbeispielen unter Bezugnahme auf die beigefügten Zeichnungen beschrieben. In den Zeichnungen zeigen schematisch:

- Figur 1 eine seitliche Schnittansicht eines Elektronik-Sicherheits-Moduls gemäß einer ersten Ausführungsform der Erfindung;

- Figur 2 eine transparente perspektivische Ansicht eines Ausschnitts einer Leiterplatte des Elektronik-Sicherheits-Moduls aus Figur 1;

- Figur 3 eine transparente perspektivische Ansicht eines anderen Ausschnitts einer Leiterplatte des Elektronik-Sicherheits-Moduls;

- Figur 4 eine seitliche Schnittansicht eines Elektronik-Sicherheits-Moduls gemäß einer zweiten Ausführungsform der Erfindung;

- Figur 5 eine Draufsicht auf die mittlere Leiterplatte des Elektronik-Sicherheits-Moduls aus Figur 4;

- Figur 6 eine Seitenansicht einer mehrlagigen Leiterplatte des Elektronik-Sicherheits-Moduls aus Figur 4;

- Figur 7 eine seitliche Schnittansicht eines Elektronik-Sicherheits-Moduls gemäß einer dritten Ausführungsform der Erfindung; und

- Figur 8 eine seitliche Schnittansicht eines Elektronik-Sicherheits-Moduls gemäß einer vierten Ausführungsform der Erfindung.

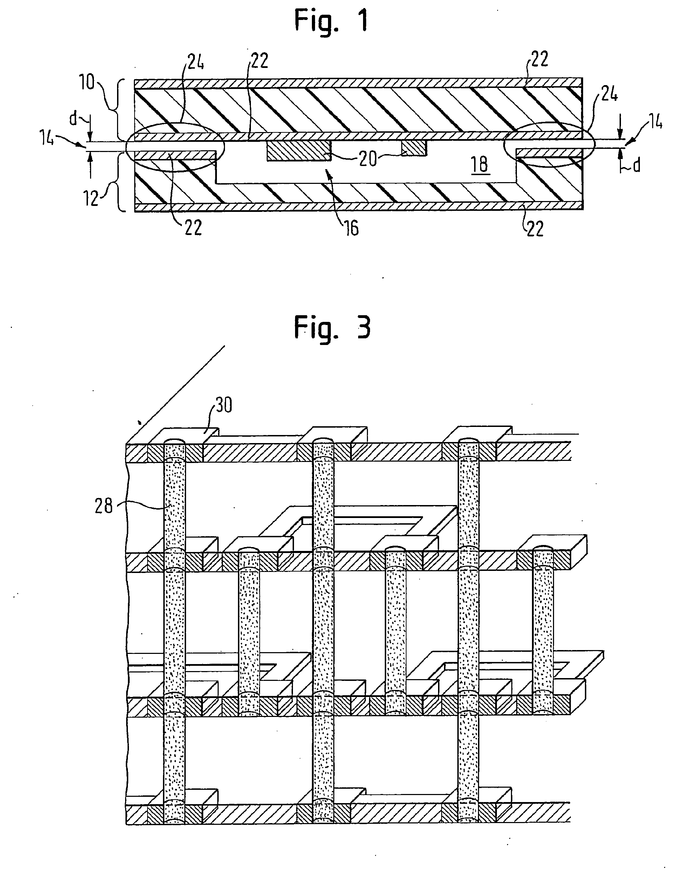

In Figur 1 ist ein Elektronik-Sicherheits-Modul mit zwei aufeinanderliegenden Leiterplatten 10, 12 dargestellt. Die Leiterplatten sind auf ihren einander gegenüberliegenden Seiten mit einem Lötstoplack 14 (Isolator) beschichtet, der den Abstand d zwischen den beiden Leiterplatten 10 und 12 bestimmt. Ausgenommen hiervon ist jedoch eine Aussparung 16 der unteren Leiterplatte 12, die durch Ausfräsen eines bestimmten Bereichs der Leiterplatte 12 hergestellt wurde. Die Aussparung 16 definiert einen geschützten Bereich 18 des Elektronik-Sicherheits-Moduls, in dem sicherheitsrelevante Bauteile 20 untergebracht sind. Im dargestellten Beispiel sind die Bauteile 20 auf der Unterseite der oberen Leiterplatte 10 angeordnet.

Die Leiterplatten 10, 12 weisen jeweils auf beiden Seiten bestimmte elektrisch leitende Flächen 22 (Kupferflächen) auf, die z.B. in Form von ausgefüllten Flächen oder Signalleitungen vorliegen. Die mit Bezugszeichen 24 gekennzeichneten Bereiche können als Kondensator betrachtet werden, wobei die elektrisch leitende Fläche 22 auf der Unterseite der oberen Leiterplatte 10 eine erste Kondensatorfläche, die gegenüberliegende elektrisch leitende Fläche 22 auf der Oberseite der unteren Leiterplatte 12 eine zweite Kondensatorfläche und der dazwischen liegende Lötstoplack 14 ein Dielektrikum darstellt. Die Kondensatorflächen sind an eine im geschützten Bereich 18 des Elektronik-Sicherheits-Moduls angeordnete Überwachungselektronik angeschlossen. Mit einer geeigneten Meßeinrichtung wird die Kapazität C des Kondensators fortlaufend gemessen und überwacht.

Die Kapazität C ist entsprechend der physikalischen Definition

$$C = \varepsilon_0 * \varepsilon_r * A / d$$

mit $\varepsilon_0$ (elektrische Feldkonstante) = 8,85 * 10$^{-12}$ F/m von folgenden Größen abhängig:

- Permittivitätszahl (Dielektrizitätszahl) $\varepsilon_r$ des Dielektrikums (Lötstoplack/Luft) zwischen den Kondensatorflächen,

- A = Fläche der gegenüberliegenden Kondensatorflächen, und

- d = Abstand zwischen den Kondensatorflächen.

Da der Abstand zwischen den Kondensatorflächen einen indirekt proportionalen Einfluß auf den Kapazitätswert hat, kann ein Manipulationsversuch, bei dem die Leiterplatten 10, 12 voneinander getrennt werden (Öffnen des Elektronik-Sicherheits-Moduls) leicht erkannt werden. Die Kapazitätsmessung stellt gewissermaßen eine Abstandsüberwachung für die beiden Leiterplatten 10, 12 dar.

Vorteilhaft bei dieser Messung ist, daß der als Sensor dienende Kondensator mit den ohnehin vorhandenen elektrisch leitenden Flächen 22 der Leiterplatten 10, 12 realisiert werden kann. Außerdem wird für die Messung nur sehr wenig elektrische Ladung bzw. Strom benötigt. Die Meßgenauigkeit kann insbesondere durch die Auslegung der Kondensatorflächen sowie durch die Wahl des Materials und die Dicke des Dielektrikums beeinflußt werden.

Es ist grundsätzlich auch möglich, zwei oder mehrere Kondensatoren "in Serie zu schalten", indem mehrere elektrisch leitende Flächen in verschiedenen Ebenen für eine Kapazitätsmessung herangezogen werden.

Es kann auch vorgesehen sein, die Kapazität zwischen einzelnen Lagen einer Leiterplatte 10, 12 zu messen.

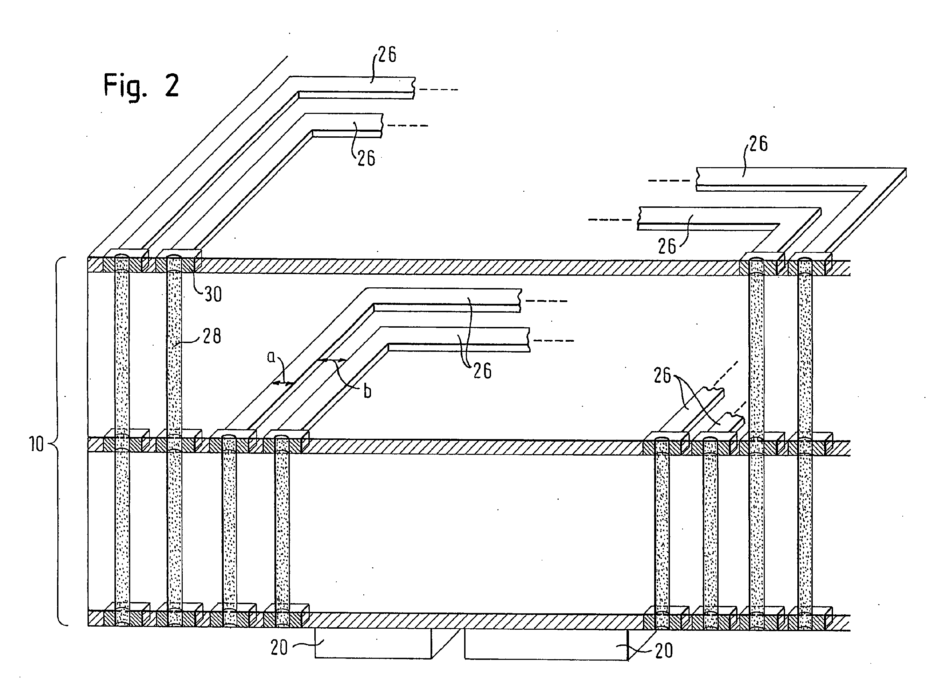

Aus Figur 2 ist ersichtlich, daß die Leiterplatten 10, 12 des Elektronik-Sicherheits-Moduls mit (bezogen auf die Darstellung in den Figuren) horizontalen Mäanderleitungen 26 versehen sind, die in zwei Lagen übereinander angeordnet sind. Es können auch mehr als zwei Lagen vorgesehen sein. Im dargestellten Ausführungsbeispiel sind die Mäanderleitungen 26 in mehreren Lagen der Leiterplatte 10 angeordnet. Die Mäanderleitungen 26 können gemäß einem anderen Ausführungsbeispiel auch nur auf der Oberseite (erste Seite) und der Unterseite (zweite Seite) der Leiterplatte 10 angeordnet sein. Die Mäanderleitungen 26 sind vorzugsweise nicht breiter als 150 μm (Breite a) und haben einen horizontalen Abstand b zueinander, der vorzugsweise ebenfalls nicht größer als 150 μm ist. Die Mäanderleitungen 26 der einzelnen Lagen können versetzt zueinander angeordnet sein, d.h. bei vertikaler Betrachtung verlaufen bestimmte Mäanderleitungen 26 einer Lage in den Zwischenräumen einer anderen Lage.

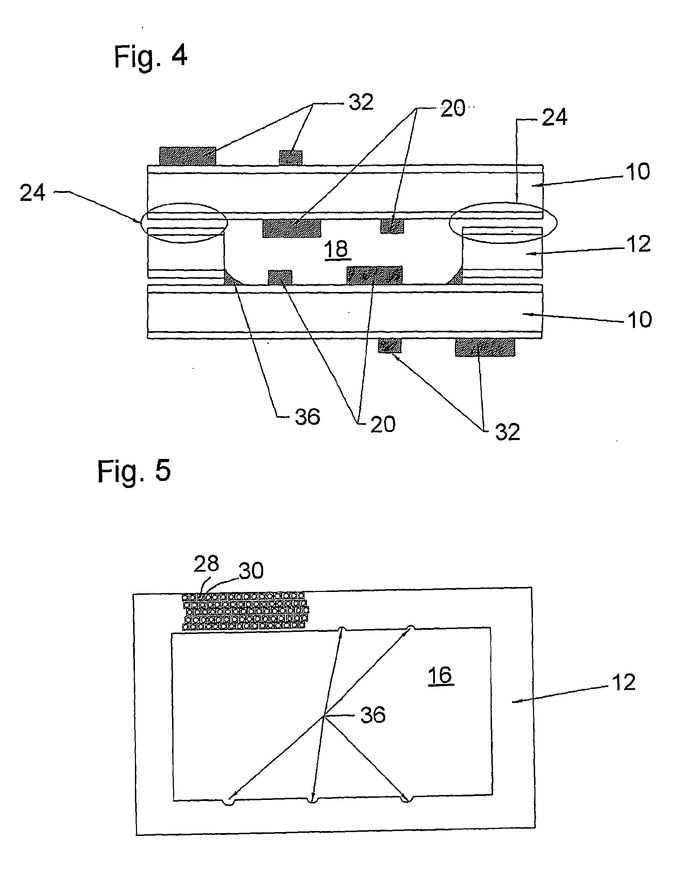

In den Figuren 2 und 3 ist erkennbar, daß die Leiterplatten 10, 12 ferner mit Bohrungen 28 durchsetzt sind, die vorzugsweise "geplugged" sind (siehe Bezugszeichen 30), d.h. die Bohrungen 28 sind entweder vollständig mit elektrisch leitendem Material gefüllt oder wenigstens an den Oberflächen mit leitendem Material überzogen.

Die gefüllten Bohrungen 28 bilden eine Vielzahl von Durchkontaktierungen, die über die gepluggten Bohrungen 28, 30 (Pads) mit den Mäanderleitungen 26 (siehe Figur 2) und/oder mit anderen Durchkontaktierungen 28 (siehe Figur 3) in Kontakt stehen. Dadurch ergibt sich zusätzlich eine vertikale Mäanderstruktur, die mittels der Überwachungselektronik überwacht werden kann. Die von der Steuereinrichtung der Überwachungselektronik ausgegebenen Mäandersignale verlaufen über die Durchkontaktierungen z.B. von der obersten Lage in die unterste Lage (bzw. von der untersten Lage in die oberste Lage) der Leiterplatte 10. In der oberen bzw. in der unteren Lage kann jeweils eine Verbindung zu einer anderen Durchkontaktierung oder einem Lötpad der darunter- bzw. darüberliegenden Leiterplatte 12 bzw. 10 vorgesehen sein.

Die Durchkontaktierungen müssen sich nicht zwangsläufig durch die gesamte Leiterplatte, sondern können sich auch nur durch einen Teil der Leiterplatte erstrecken, insbesondere nur durch die sicherheitsrelevanten Lagen. Die Durchkontaktierungen der Mäanderleitungen 26 können auch von verschiedenen Lagen ausgehen, wobei die Durchkontaktierungen vorzugsweise soweit wie möglich entfernt von den Außenlagen des Elektronikmoduls angeordnet sind. Dadurch wird die Kontaktierung der Mäandersignale weiter erschwert.

Bei der unteren Leiterplatte 12 sind auch im Bereich unterhalb der Aussparung 16 eine oder mehrere Lagen von Mäanderleitungen 26 vorgesehen.

Mit einer geeigneten Meßeinrichtung der Überwachungselektronik werden fortlaufend Widerstands- und/oder Kapazitätsmessungen an den Mäanderleitungen 26 und an den Durchkontaktierungen 28 (innerhalb einer Leiterplatte 10, 12 oder zwischen zwei Leiterplatten 10, 12 durchgeführt). Es können auch Kapazitätsmessungen zwischen Mäanderleitungen 26 und einem Sensorsignal durchgeführt werden. Das Sensorsignal kann z.B. neben der Mäanderleitung verlegt werden (in derselben Lage wie die Mäanderleitung oder in einer in einer Lage oberhalb oder unterhalb der Mäanderleitung).

Manipulationsversuche, bei denen Mäanderleitungen 26 oder Durchkontaktierungen 28 unterbrochen oder überrückt werden, können aufgrund der dabei auftretenden Widerstands- bzw. Kapazitätsänderungen leicht erkannt werden. Vorzugsweise hat jede einzelne Mäanderleitung 26 gleichzeitig Einfluß auf unterschiedliche Messungen. Dadurch wird eine Manipulation der Mäanderleitungen 26 und Durchkontaktierungen 28 deutlich erschwert, weil gleichzeitig mehrere physikalische Eigenschaften manipuliert werden müßten.

Die Mäanderleitungen 26 einer Lage können von der Steuereinrichtung der Überwachungselektronik in vorteilhafter Weise mit wenigstens zwei unterschiedlichen Signalen gespeist werden. Wenn z.B. zwei benachbarte Mäanderleitungen 26 mit unterschiedlichen Signalen versorgt werden, ist ein Kurzschluß zwischen diesen Leitungen leicht nachweisbar.

Die Mäanderleitungen 26 (einschließlich der vertikalen Struktur) und die Pads 30, die elektrisch leitenden Flächen 22 einer benachbarten Leiterplatte gegenüberliegen, können auch für eine oben beschriebene Kapazitätsmessung zwischen diesen Leiterplatten genutzt werden. Um den Nachweis von Kapazitätsänderungen zu verbessern, sind die Bohrungen 28, wie bereits erwähnt, entweder vollständig mit elektrisch leitendem Material ausgefüllt oder mit Material gefüllt und an den Oberflächen mit elektrisch leitendem Material überzogen ("plugged"). Außerdem sind die Pads 30, die eine Vielzahl kleiner elektrisch leitender Flächen darstellen, rechteckförmig ausgebildet und mit minimalem Zwischenabstand angeordnet (siehe auch Figur 5), um eine möglichst große Kondensatorfläche zu erhalten.

In Figur 4 ist ein Elektronik-Sicherheits-Modul mit einem abweichenden Aufbau dargestellt. Zwischen zwei äußeren Leiterplatten 10 (ohne ausgefräste Bereiche) ist eine mittlere Leiterplatte 12 angeordnet, die in Figur 5 einzeln in Draufsicht gezeigt ist. Die mittlere Leiterplatte 12 hat die Form eines Rahmens, der eine Aussparung 16 umgibt. Die Aussparung 16 definiert wiederum einen geschützten Bereich 18 des Elektronik-Sicherheits-Moduls, in dem sicherheitsrelevante Bauteile 20 untergebracht sind. Bei diesem Aufbau ist kein Ausfräsen von Leiterplatten notwendig, und die sicherheitsrelevanten Bauteile können vorteilhaft auf zwei Leiterplatten 10 angeordnet werden. Die Außenseite der oberen und/oder unteren Leiterplatte 10 kann zur Bestückung von nicht-sicherheitsrelevanten Bauteilen 32 verwendet werden.

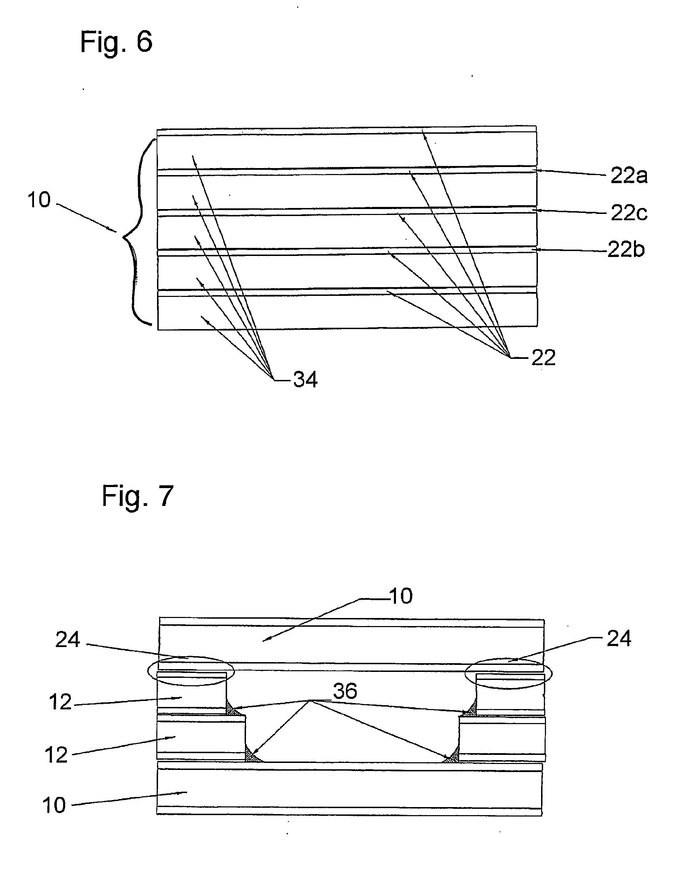

Der innere Bereich 18 des in Figur 4 dargestellten Elektronik-Sicherheits-Moduls ist von oben durch Mäanderleitungen 26 in einer oder mehreren Lagen in der oberen Leiterplatte 10 und von unten durch Mäanderleitungen 26 in einer oder mehreren Lagen in der unteren Leiterplatte 10 geschützt. Gemäß der Darstellung in Figur 6 kann eine äußere Leiterplatte 10 mehrlagig ausgebildet sein. Die einzelnen Lagen setzen sich aus sog. prepegs 34 und elektrisch leitenden Flächenbereichen 22 zusammen. Eine erste und eine zweite Lage 22a, 22b mit Mäanderleitungen 26 sind im äußeren bzw. in dem dem geschützten Bereich 18 zugewandten Bereich der Leiterplatte 10 gebildet. Zwischen den Lagen 22a, 22b befindet sich eine Sensorfläche 22c für die Kapazitätsüberwachung, bei der die Kapazität zwischen der Sensorfläche 22c und der ersten Lage 22a Mäanderleitungen 26 sowie zwischen der Sensorfläche 22c und der zweiten Lage 22b Mäanderleitungen 26 überwacht wird. Die Lagen 22a, 22b mit den Mäanderleitungen 26 und die Sensorfläche 22c umhüllen den inneren Bereich 18 mit den sicherheitsrelevanten Bauteilen 20 und den Signalleitungen dieser Bauteile. Die Kapazitätsmessung kann mit einer Widerstandsmessung kombiniert werden. Beim Entfernen einer Mäanderleitung 26 in einer Lage 22a oder 22b ändert sich sowohl der Widerstand dieser Mäanderleitung 26 als auch die Kapazität zwischen dieser Mäanderleitung 26 und der Sensorfläche 22c.

Außerdem ist beim Elektronik-Sicherheits-Modul der Figur 4 ein seitlicher Schutz durch eine vertikale Mäanderstruktur (vgl. Figur 3) mit Durchkontaktierungen realisiert. In der mittleren Leiterplatte 12 sind die Durchkontaktierungen so miteinander verbunden, daß benachbarte Durchkontaktierungen jeweils mit unterschiedlichen Mäandersignalen gespeist werden. Die Durchkontaktierungen sind zudem so zueinander versetzt, daß ein seitliches Durchbohren zwischen den Durchkontaktierungen ohne Unterbrechung einer Mäanderleitung oder Erzeugung eines Kurzschlusses praktisch nicht möglich ist.

Ein Abheben einer Leiterplatte 10 des Elektronik-Sicherheits-Moduls kann wiederum durch Kapazitätsmessungen zwischen den einzelnen Leiterplatten erkannt werden.

Eine der äußeren Leiterplatten 10 ist im geschützten Bereich 18 des Elektronik-Sicherheits-Moduls mit der mittleren Leiterplatte 12 verlötet. Diese Lötverbindungen 36 (siehe auch Figur 5) können als mechanische und/oder elektrische Verbindung zwischen den Leiterplatten genutzt werden. Die Lötverbindungen 36 können mit der Überwachungselektronik überwacht werden (z.B. Erkennen einer Unterbrechung eines Signals zwischen Leiterplatte 12 und Leiterplatte 10). In diesem Fall ist eine kapazitive Abstandsüberwachung nur zwischen der anderen äußeren Leiterplatte 10 und der mittleren Leiterplatte 12 notwendig.

Die Höhe der rahmenförmigen mittleren Leiterplatte 12 bestimmt die maximale Bauhöhe für die im Elektronik-Sicherheits-Modul bestückten Bauteile 20. Die Bauhöhe kann durch Übereinanderstapeln mehrerer rahmenförmiger Leiterplatten 12 vergrößert werden, wie in Figur 7 gezeigt. Zwischen einer äußeren und einer hierzu benachbarten Leiterplatte sowie zwischen den mittleren Leiterplatten 12 können wiederum Lötverbindungen 36 vorgesehen sein. Auch diese Bauform weist eine Leiterplatten-übergreifende vertikale Mäanderstruktur auf.

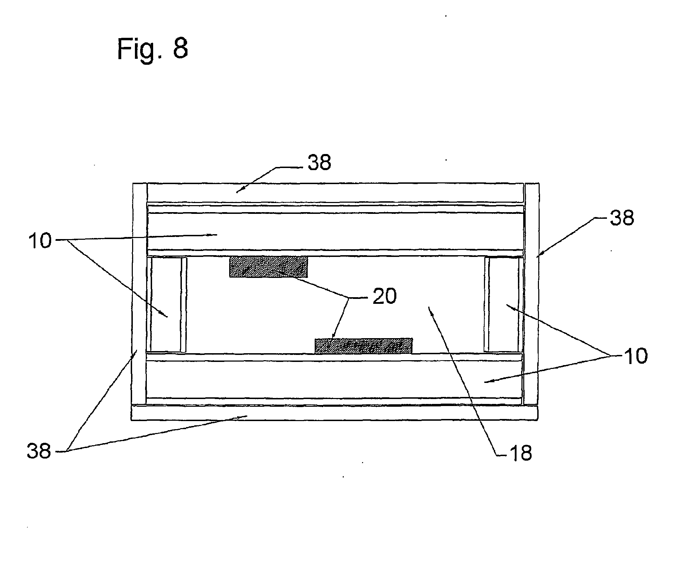

Figur 8 zeigt ein Elektronik-Sicherheits-Modul, bei dem die mittleren Leiterplatten 12 durch vertikal angeordnete Leiterplatten 10 ersetzt sind. Das Elektronik-Sicherheits-Modul ist auf allen Seiten von elektrisch leitenden Abdeckungen 38 umgeben. Jede Abdeckung 38 bildet mit ihrer benachbarten Leiterplatte 10 einen Kondensator, wobei die Abdeckung 38 und die der Abdeckung 38 gegenüberliegenden elektrisch leitenden Flächen 22 der Leiterplatte 10 die Kondensatorflächen bilden. Als Dielektrikum dient wiederum z.B. der Lötstoplack der Leiterplatte 10.

Die Kondensatorflächen sind an die Überwachungselektronik angeschlossen, deren Bauteile 20 auf denjenigen Seiten der Leiterplatten 10 angeordnet sind, die dem geschützten Bereich 18 zugewandt sind. Somit kann die Kapazität zwischen den Abdeckungen 38 und den Leiterplatten 10 ständig überwacht werden. Ein Entfernen einer oder mehrerer Abdeckungen 38 führt zu einer erkennbaren Kapazitätsänderung.

Eventuell vorgesehene Öffnungen in einer Abdeckung 38 (z.B. für Spannungsversorgungs- oder Datenleitungen, etc.) werden durch andere Maßnahmen innerhalb des Elektronik-Sicherheits-Moduls geschützt (z.B. Mäanderleitungen, Kapazitätsmessungen zu anderen Lagen der jeweiligen Leiterplatte 10, etc.).

Für die einzelnen Messungen (Widerstands- und/oder Kapazitätsmessungen) der erfindungsgemäßen Elektronik-Sicherheits-Module werden unter Berücksichtigung der Fertigungstoleranzen individuelle Grenzwerte festgelegt und in einem Speicher der Überwachungselektronik hinterlegt. Es ist möglich, daß (mehrere) Faktoren eingstellt werden, so daß die Grenzwerte abhängig vom Istwert der Messung und den eingestellten Faktoren festgelegt werden.

Die Überwachungselektronik vergleicht die gemessenen Widerstands- und/oder Kapazitätswerte mit den individuellen Grenzwerten. Sehr kleine Differenzen zwischen aufeinanderfolgenden Meßwerten sind zulässig, während sprunghafte Änderungen oder schnelle Änderungen auf einen Manipulationsversuch schließen lassen.

Die Grenzwerte können die erlaubten Meßwerte nach oben und unten eingrenzen, d.h. es ist möglich, einen oberen und einen unteren Grenzwert festzulegen. Dies ermöglicht z.B. das Erkennen sowohl einer Verkürzung als auch einer Verlängerung einer Mäanderleitung 26.

Wird mittels der Überwachungselektronik ein Manipulationsversuch (Kurzschluß, Öffnen, Verbinden, Verkürzen, Verlängern etc.) von Mäanderleitungen 26 erkannt, löst die Überwachungselektronik unmittelbar Sicherheitsmaßnahmen aus, wie z.B. das Löschen von sicherheitsrelevanten Informationen.

Eine Besonderheit der erfindungsgemäßen Elektronik-Sicherheits-Module besteht in der selbsttätigen Nachführung der zulässigen Grenzwerte (Selbstkalibrierung). Im Lauf der Lebenszeit eines Elektronik-Sicherheits-Moduls ändern sich die Meßwerte aufgrund von Alterungserscheinungen. Ebenso besteht eine Abhängigkeit der Meßwerte von Temperatur-, Feuchtigkeits- und anderen Einflüssen. Die Grenzwerte werden daher von der Überwachungselektronik selbsttätig an die jeweiligen Gegebenheiten angepaßt (Nachführung der Grenzwerte). Dies ermöglicht es, die Grenzwerte stets eng zu fassen, was für einen effektiven Manipulationsnachweis sehr vorteilhaft ist. Noch engere Grenzen können durch eine Kombination der Messungen mit einem im Elektronik-Sicherheits-Modul enthaltenen Temperatursensor realisiert werden.

Die beschriebenen Ausführungsformen der Elektronik-Sicherheits-Module sind beispielhaft zu verstehen. Kombinationen von Merkmalen der einzelnen Ausführungsformen sind selbstverständlich möglich.

**Patentansprüche**

1. Elektronik-Sicherheits-Modul, mit einem geschützten Bereich (18), in dem sicherheitsrelevante Bauteile (20) untergebracht sind, wobei das Elektronik-Sicherheits-Modul wenigstens eine erste Leiterplatte (10, 12) und eine zu dieser Leiterplatte (10, 12) benachbarte zweite Leiterplatte (10, 12) oder Abdeckung (38) aufweist, **dadurch gekennzeichnet, daß** in der ersten Leiterplatte (10, 12) Durchkontaktierungen vorgesehen sind, die sich durch einen Teil der Leiterplatte (10, 12) erstrecken oder von einer ersten Seite der Leiterplatte (10, 12) durch die Leiterplatte (10, 12) hindurch zu einer der ersten Seite entgegengesetzten zweiten Seite der Leiterplatte (10, 12) führen.

2. Elektronik-Sicherheits-Modul nach Anspruch 1, **dadurch gekennzeichnet, daß** bestimmte Durchkontaktierungen eine elektrische Verbindung zu der benachbarten Leiterplatte (10, 12) oder der Abdeckung (38) herstellen.

3. Elektronik-Sicherheits-Modul nach Anspruch 1 oder 2, **dadurch gekennzeichnet, daß** wenigstens eine der Leiterplatten (10, 12) Mäanderleitungen (26) aufweist.

4. Elektronik-Sicherheits-Modul nach Anspruch 3, **dadurch gekennzeichnet, daß** die Durchkontaktierungen in Verbindung mit Mäanderleitungen (26) der Leiterplatte (10, 12) stehen.

5. Elektronik-Sicherheits-Modul nach Anspruch 4, **dadurch gekennzeichnet, daß** benachbarte Durchkontaktierungen einer Leiterplatte (10, 12) mit Mäanderleitungen (26) verbunden sind, die mit unterschiedlichen Signalen gespeist werden.

6. Elektronik-Sicherheits-Modul nach einem der vorhergehenden Ansprüche, **dadurch gekennzeichnet, daß** die Durchkontaktierungen mit elektrisch leitenden Pads (30) versehen sind.

7. Elektronik-Sicherheits-Modul nach Anspruch 6, **dadurch gekennzeichnet, daß** die Pads (30) rechteckförmig ausgebildet sind.

8. Elektronik-Sicherheits-Modul nach einem der vorhergehenden Ansprüche, **dadurch gekennzeichnet, daß** die Durchkontaktierungen durch Bohrungen (28) der Leiterplatte (10, 12) verlaufen, die entweder vollständig mit elektrisch leitendem Material gefüllt sind oder nur an den Oberflächen mit elektrisch leitendem Material überzogen sind.

9. Elektronik-Sicherheits-Modul nach einem der Ansprüche 3 bis 8, **dadurch gekennzeichnet, daß** die Mäanderleitungen (26) der Leiterplatte (10, 12) in wenigstens zwei Lagen übereinander angeordnet sind.

10. Elektronik-Sicherheits-Modul nach Anspruch 9, **dadurch gekennzeichnet, daß** die Mäanderleitungen (26) einer Lage versetzt zu den Mäanderleitungen (26) einer benachbarten Lage angeordnet sind.

11. Elektronik-Sicherheits-Modul nach einem der Ansprüche 3 bis 10, **dadurch gekennzeichnet, daß** die Breite a einer Mäanderleitung (26) nicht mehr als 150 $\mu$m beträgt.

12. Elektronik-Sicherheits-Modul nach einem der Ansprüche 3 bis 11, **dadurch gekennzeichnet, daß** der Abstand b zwischen zwei Mäanderleitungen (26) einer Lage nicht mehr als 150 $\mu$m beträgt.

13. Elektronik-Sicherheits-Modul nach einem der Ansprüche 9 bis 12, **gekennzeichnet durch** eine Steuereinrichtung, die die Mäanderleitungen (26) einer Lage mit wenigstens zwei unterschiedlichen Signalen speist.

14. Elektronik-Sicherheits-Modul nach einem der Ansprüche 3 bis 13, **gekennzeichnet durch** eine Meßeinrichtung zur Messung eines Widerstands der Mäanderleitungen (26) oder eines Widerstands zwischen zwei Mäanderleitungen (26).

15. Elektronik-Sicherheits-Modul nach einem der Ansprüche 3 bis 14, **gekennzeichnet durch** eine Meßeinrichtung zur Messung einer Kapazität zwischen Mäanderleitungen (26) oder zwischen Mäanderleitungen (26) und einem Sensorsignal oder zwischen Mäanderleitungen (26) und einer Sensorfläche (22c).

16. Elektronik-Sicherheits-Modul nach einem der Ansprüche 3 bis 15, **dadurch gekennzeichnet, daß** mehrere Leiterplatten (10, 12) mit Mäanderleitungen (26) vorgesehen sind.

17. Elektronik-Sicherheits-Modul nach Anspruch 16, **dadurch gekennzeichnet, daß** die Leiterplatten (10, 12) übereinander angeordnet sind, wobei wenigstens eine der Leiterplatten (12) eine Aussparung (16) aufweist, die den geschützten Bereich (18) begrenzt.

18. Elektronik-Sicherheits-Modul nach Anspruch 17, **dadurch gekennzeichnet, daß** die Aussparung (16) durch einen ausgefrästen Abschnitt der Leiterplatte (12) gebildet ist.

19. Elektronik-Sicherheits-Modul nach Anspruch 17, **dadurch gekennzeichnet, daß** die Leiterplatte (12) mit der Aussparung (16) rahmenförmig ist.

20. Elektronik-Sicherheits-Modul nach einem der Ansprüche 17 bis 19, **dadurch gekennzeichnet, daß** die Mäanderleitungen (26) der Leiterplatte (12) mit der Aussparung (16) mit einer Überwachungselektronik im geschützten Bereich (18) verbunden sind.

21. Elektronik-Sicherheits-Modul nach einem der Ansprüche 17 bis 20, **dadurch gekennzeichnet, daß** die Leiterplatte (12) mit der Aussparung (16) in einem dem geschützten Bereich (18) zugewandten Abschnitt mit einer benachbarten Leiterplatte (10) verlötet (36) ist.

22. Elektronik-Sicherheits-Modul nach einem der Ansprüche 17 bis 21, **dadurch gekennzeichnet, daß** mehrere der Leiterplatten (12) Aussparungen (16) aufweisen.

23. Elektronik-Sicherheits-Modul nach einem der vorhergehenden Ansprüche, **gekennzeichnet durch** eine Meßeinrichtung zur Messung einer Kapazität zwischen den beiden Leiterplatten (10, 12) bzw. zwischen der ersten Leiterplatte (10, 12) und der Abdeckung (38).

24. Elektronik-Sicherheits-Modul nach einem der vorhergehenden Ansprüche, **gekennzeichnet durch** eine Meßeinrichtung zur Messung einer Kapazität zwischen verschiedenen Signalleitungen und/oder Durchkontaktierungen und/oder Sensorflächen einer Leiterplatte (10, 12).

**25.** Elektronik-Sicherheits-Modul nach einem der vorhergehenden Ansprüche, **gekennzeichnet durch** eine innerhalb des Elektronik-Sicherheits-Moduls angeordnete Überwachungselektronik mit der Widerstand- und/oder Kapazitätsmeßwerte mit Grenzwerten verglichen werden, wobei die Grenzwerte **durch** die Überwachungselektronik selbsttätig veränderbar sind.

**26.** Elektronik-Sicherheits-Modul nach Anspruch 25, **dadurch gekennzeichnet, daß** die Grenzwerte an bestimmte Gegebenheiten angepaßt werden.

**27.** Elektronik-Sicherheits-Modul nach Anspruch 25 oder 26, **gekennzeichnet durch** einen Temperatursensor.

# Fig. 1

# Fig. 3

Fig. 2

EP 1 804 557 A1

## Fig. 4

## Fig. 5

## Fig. 6

## Fig. 7

Fig. 8

**Europäisches Patentamt**

# EUROPÄISCHER RECHERCHENBERICHT

Nummer der Anmeldung

EP 06 02 6836

## EINSCHLÄGIGE DOKUMENTE

| Kategorie | Kennzeichnung des Dokuments mit Angabe, soweit erforderlich, der maßgeblichen Teile | Betrifft Anspruch | KLASSIFIKATION DER ANMELDUNG (IPC) |
|---|---|---|---|
| X | WO 03/019467 A (TRINTECH LTD [IE]; MARTIN MICHAEL [IE]; MEEHAN CHRISTOPHER PATRICK [IE] 6. März 2003 (2003-03-06) * Seite 6, Zeilen 21-32 * * Seite 8, Zeilen 1-21 * * Seite 9, Zeilen 13-24 * * Ansprüche 1-3,12; Abbildungen 1-8 * | 1-8, 11-14 | INV. H05K1/02 G06F21/06 |
| Y | ----- | 25-27 | |
| X | EP 1 126 358 A1 (ASCOM MONETEL SA [FR]) 22. August 2001 (2001-08-22) * Absätze [0031] - [0035], [0066]; Abbildungen 1-4 * ----- | 1-4, 6-11, 14-17, 23,24 | |
| X | US 2004/120101 A1 (COHEN YITZHAK [IL] ET AL) 24. Juni 2004 (2004-06-24) * Absätze [0021] - [0030]; Abbildungen 2-4 * ----- | 1-14, 18-22 | |
| Y | US 6 477 650 B1 (KOKUBO KENICHI [JP]) 5. November 2002 (2002-11-05) * Spalte 3, Zeile 34 - Spalte 4, Zeile 67 * ----- | 25-27 | RECHERCHIERTE SACHGEBIETE (IPC) H05K G06F H01L |
| E | WO 2007/003226 A (SIEMENS AG [DE]; WIMMER ANTON [DE]; WOLF PETER [DE]) 11. Januar 2007 (2007-01-11) * das ganze Dokument * ----- | 1-14, 18-22 | |

Der vorliegende Recherchenbericht wurde für alle Patentansprüche erstellt

| Recherchenort | Abschlußdatum der Recherche | Prüfer |
|---|---|---|
| Den Haag | 5. April 2007 | Degroote, Bart |

KATEGORIE DER GENANNTEN DOKUMENTE

X : von besonderer Bedeutung allein betrachtet
Y : von besonderer Bedeutung in Verbindung mit einer anderen Veröffentlichung derselben Kategorie
A : technologischer Hintergrund
O : nichtschriftliche Offenbarung
P : Zwischenliteratur

T : der Erfindung zugrunde liegende Theorien oder Grundsätze
E : älteres Patentdokument, das jedoch erst am oder nach dem Anmeldedatum veröffentlicht worden ist
D : in der Anmeldung angeführtes Dokument
L : aus anderen Gründen angeführtes Dokument
...............
& : Mitglied der gleichen Patentfamilie, übereinstimmendes Dokument

EPO FORM 1503 03.82 (P04C03)

**ANHANG ZUM EUROPÄISCHEN RECHERCHENBERICHT
ÜBER DIE EUROPÄISCHE PATENTANMELDUNG NR.**

EP 06 02 6836

In diesem Anhang sind die Mitglieder der Patentfamilien der im obengenannten europäischen Recherchenbericht angeführten
Patentdokumente angegeben.
Die Angaben über die Familienmitglieder entsprechen dem Stand der Datei des Europäischen Patentamts am
Diese Angaben dienen nur zur Unterrichtung und erfolgen ohne Gewähr.

05-04-2007

| Im Recherchenbericht angeführtes Patentdokument | | Datum der Veröffentlichung | Mitglied(er) der Patentfamilie | | Datum der Veröffentlichung |
|---|---|---|---|---|---|
| WO 03019467 | A | 06-03-2003 | EP | 1421549 A1 | 26-05-2004 |
| EP 1126358 | A1 | 22-08-2001 | AT | 292817 T | 15-04-2005 |
| | | | DE | 60109836 D1 | 12-05-2005 |
| | | | DE | 60109836 T2 | 12-01-2006 |
| | | | FR | 2805074 A1 | 17-08-2001 |
| US 2004120101 | A1 | 24-06-2004 | CN | 1510810 A | 07-07-2004 |
| | | | EP | 1432031 A1 | 23-06-2004 |
| US 6477650 | B1 | 05-11-2002 | JP | 3129258 B2 | 29-01-2001 |
| | | | JP | 11134260 A | 21-05-1999 |
| WO 2007003226 | A | 11-01-2007 | KEINE | | |

EPO FORM P0461

Für nähere Einzelheiten zu diesem Anhang : siehe Amtsblatt des Europäischen Patentamts, Nr.12/82